# EUROPEAN PATENT APPLICATION

(11) **EP 4 105 792 A1**
(43) Date of publication of application: **21.12.2022**
(21) Application number: 20918446.4
(22) Date of filing: 09.11.2020
(51) Int. Cl.: G06F 16/953

(54) **WEB PAGE INTERFACE QUERY METHOD AND APPARATUS, ELECTRONIC DEVICE, AND STORAGE MEDIUM**

(30) Priority: 11.02.2020 CN 202010087256
(71) Applicant: Beijing Dajia Internet Information Technology Co., Ltd., Beijing 100085 (CN)
(72) Inventor: ZHANG, Jianbo, Beijing 100085 (CN)
(74) Representative: Angerhausen, Christoph
(86) International application number: PCT/CN2020/127570
(87) International publication number: WO 2021/159783

(57) **Abstract**

The disclosure can provide a method and an apparatus for querying application programming interfaces of a webpage, an electronic device, and a storage medium. The method includes: receiving, from a client, a request for querying the interfaces of the webpage, and determining a to-be-analyzed webpage corresponding to the request for querying the interfaces of the webpage; searching for historical request events of the to-be-analyzed webpage; determining interface addresses invoked when performing the historical request events, and determining invoked interfaces of the to-be-analyzed webpage based on the interface addresses; and generating an interface list based on interface identifiers of the invoked interfaces, and feeding the interface list back to the client. With the method, the comprehensive search of the interfaces of the to-be-analyzed webpage may be realized by the tool for querying the interfaces to obtain the interface list, so that the definition information of each invoked interface in the webpage is quickly viewed, thereby implementing a full and efficient query for interfaces of webpages.

## Description

### CROSS-REFERENCE TO RELATED APPLICATION

This application claims priority to Chinese Patent Application No. 202010087256.6 submitted by Beijing Dajia Internet Information Technology CO., LTD. on February 11, 2020 and titled with "method and apparatus for querying application programming interfaces of webpage, electronic device, and storage medium".

### FIELD

The disclosure relates to the field of computer technologies, and more particularly, to a method and an apparatus for querying application programming interfaces of a webpage, an electronic device, and a storage medium.

### BACKGROUND

Webpages and servers often obtain or submit data through APIs (application programming interfaces, hereinafter referred to as interfaces) during a process of developing webpages. When complexity of a service increases, the number and complexity of interfaces may increase, too. There may be more than a dozen interfaces with different functions used in a webpage function. It may be inevitable that parameters passed by interfaces and content fed back by interfaces may not conform to criterions during a process of joint debugging between a front end and a back end. The interface may be verified as follows. A developer may manually copy an interface address to an interface platform to query data, and compare, one by one, whether parameter formats in an interface definition, data formats fed back, and the like are consistent with data formats currently requested, to achieve the parameter verification.

When the number of interfaces is relatively large, it may take a lot of time to find each interface definition in webpages one by one, and there is a problem of low efficiency in querying interfaces of webpages.

### SUMMARY

The disclosure provides a method and an apparatus for querying application programming interfaces of a webpage, an electronic device, and a storage medium, to at least solve the problem of low efficiency in querying interfaces of webpages in the related art. Technical solutions of the disclosure are as follows.

According to embodiments of the disclosure in a first aspect, a method for querying application programming interfaces of a webpage is provided. The method is applicable to a server. The method includes: receiving, from a client, a request for querying the interfaces of the webpage, and determining a to-be-analyzed webpage corresponding to the request for querying the interfaces of the webpage; searching for historical request events of the to-be-analyzed webpage; determining interface addresses invoked when performing the historical request events, and determining invoked interfaces of the to-be-analyzed webpage based on the interface addresses; and generating an interface list based on interface identifiers of the invoked interfaces, and feeding the interface list back to the client.

In some embodiments, the request for querying the interfaces of the webpage is generated through responding to by the client a trigger operation on a tool for querying interfaces and based on a webpage corresponding to the trigger operation.

In some embodiments, after determining the invoked interfaces of the to-be-analyzed webpage based on the interface addresses invoked when performing the historical request events, the method further includes: searching for interface metadata corresponding to the invoked interfaces based on the interface identifiers of the invoked interfaces; obtaining an interface list item corresponding to a display interface of the interface list; and feeding a buffering instruction carrying the interface metadata back to the client, so that the client buffers the interface metadata to an interface metadata buffer region corresponding to the interface list item, in which buffer locations of the interface metadata in the interface metadata buffer region are correlated with the interface identifiers, and the interface metadata buffer region is configured to display correlated interface metadata when an interface identifier in the interface list item is triggered.

In some embodiments, after searching for the interface metadata corresponding to the invoked interfaces based on the interface identifiers of the invoked interfaces, the method further includes: obtaining interface verification results by verifying request results corresponding to the historical request events based on the interface metadata; and feeding a buffering instruction carrying the interface verification results of the invoked interfaces back to the client, so that the client buffers the interface verification results to a verification result buffer region.

In some embodiments, obtaining the interface verification results by verifying the request results corresponding to the historical request events based on the interface metadata includes: obtaining passing parameters with preset standards and format requirements on feedback data, in the interface metadata; obtaining passing parameter verification results by verifying passing parameters corresponding to the historical request events based on the passing parameters with preset standards; obtaining feedback data verification results by verifying feedback data corresponding to the historical request events based on the format requirements on feedback data; and obtaining the interface verification results based on the passing parameter verification results and the feedback data verification results.

In some embodiments, after feeding the interface identifiers of the invoked interfaces back to the client, the method further includes: receiving, from the client, a request for querying an interface, and extracting a keyword carried in the request for querying the interface; obtaining an interface query result corresponding to the keyword, in which the interface query result includes an interface identifier and interface metadata of an interface corresponding to the keyword; and feeding the interface query result back to the client.

In some embodiments, after searching for the historical request events of the to-be-analyzed webpage, the method further includes: obtaining an abnormal request event that a corresponding request result carries an abnormal status code from the historical request events; identifying an abnormal interface corresponding to the abnormal request event, and determining abnormal interface data; and feeding a buffering instruction carrying the abnormal interface data back to the client, so that the client buffers the abnormal interface data to a data buffer region.

In some embodiments, after identifying the abnormal interface corresponding to the abnormal request event, the method further includes: receiving, from the client, abnormal interface verification rules; running the abnormal interface verification rules, and obtaining a parameter verification result of the abnormal interface by verifying parameters in the abnormal interface; and feeding the parameter verification result of the abnormal interface to the client.

According to embodiments of the disclosure in a second aspect, an apparatus for querying application programming interfaces of a webpage. The apparatus includes: a query request receiving module, configured to receive, from a client, a request for querying the interfaces of the webpage, and determine a to-be-analyzed webpage corresponding to the request for querying the interfaces of the webpage; a request event searching module, configured to search for historical request events of the to-be-analyzed webpage; an invoked interface determining module, configured to determine interface addresses invoked when performing the historical request events, and determine invoked interfaces of the to-be-analyzed webpage based on the interface addresses; and an interface list generating module, configured to generate an interface list based on interface identifiers of the invoked interfaces, and feed the interface list back to the client.

In some embodiments, the request for querying the interfaces of the webpage is generated through responding to by the client a trigger operation on a tool for querying interfaces and based on a webpage corresponding to the trigger operation.

In some embodiments, the apparatus further includes: an interface metadata searching module, configured to search for interface metadata corresponding to the invoked interfaces based on the interface identifiers of the invoked interfaces; an interface list item obtaining module, configured to obtain an interface list item corresponding to a display interface of the interface list; and an interface metadata feeding module, configured to feed a buffering instruction carrying the interface metadata back to the client, so that the client buffers the interface metadata to an interface metadata buffer region corresponding to the interface list item, in which buffer locations of the interface metadata in the interface metadata buffer region are correlated with the interface identifiers, and the interface metadata buffer region is configured to display correlated interface metadata when an interface identifier in the interface list item is triggered.

In some embodiments, the apparatus further includes: an interface verifying module, configured to obtain interface verification results by verifying request results corresponding to the historical request events based on the interface metadata; and a verification result feeding module, configured to feed a buffering instruction carrying the interface verification results of the invoked interfaces back to the client, so that the client buffers the interface verification results to a verification result buffer region.

In some embodiments, the interface verifying module includes: a parameter-requirement obtaining unit, configured to obtain passing parameters with preset standards and format requirements on feedback data, in the interface metadata; a passing parameter verifying unit, configured to obtain passing parameter verification results by verifying passing parameters corresponding to the historical request events based on the passing parameters with preset standards; a feedback data verifying unit, configured to obtain feedback data verification results by verifying feedback data corresponding to the historical request events based on the format requirements on feedback data; and an interface verification result obtaining unit, configured to obtain the interface verification results based on the passing parameter verification results and the feedback data verification results.

In some embodiments, the apparatus further includes an interface searching module. The interface searching module includes: a keyword extracting unit, configured to receive, from the client, a request for querying an interface, and extract a keyword carried in the request for querying the interface; a querying unit, configured to obtain an interface query result corresponding to the keyword, in which the interface query result includes an interface identifier and interface metadata of an interface corresponding to the keyword; and a query result feeding unit, configured to feed the interface query result back to the client.

In some embodiments, the apparatus further includes an abnormal interface identifying module. The abnormal interface identifying module includes: an abnormal request event obtaining unit, configured to obtain an abnormal request event that a corresponding request result carries an abnormal status code from the historical request events; an abnormal interface identifying unit, configured to identify an abnormal interface corresponding to the abnormal request event, and determine abnormal interface data; and an abnormal interface feeding unit, configured to feed a buffering instruction carrying the abnormal interface data back to the client, so that the client buffers the abnormal interface data to a data buffer region.

In some embodiments, the apparatus further includes an abnormal interface parameter verifying module. The abnormal interface parameter verifying module includes: a verification rule obtaining unit, configured to receive, from the client, abnormal interface verification rules; an abnormal interface parameter verifying unit, configured to run the abnormal interface verification rules, and obtain a parameter verification result of the abnormal interface by verifying parameters in the abnormal interface; and a verification result feeding unit, configured to feed the parameter verification result of the abnormal interface to the client.

According to embodiments of the disclosure in a third aspect, a method for querying application programming interfaces of a webpage is provided. The method is applicable to a client. The method includes: responding to a trigger operation on a tool for querying interfaces, and generating a request for querying the interfaces of the webpage based on a webpage corresponding to the trigger operation; transmitting the request for querying the interfaces of the webpage to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back; and receiving and displaying the interface list fed back by the server.

In some embodiments, the method further includes: receiving, from the server, a buffering instruction carrying interface metadata after the server searches for the interface metadata based on the interface identifiers; obtaining an interface list item corresponding to a display interface of the interface list; buffering the interface metadata to an interface metadata buffer region corresponding to the interface list item; and displaying, interface metadata correlated with an interface identifier in the interface list, in the interface metadata buffer region, in response to a trigger operation on the interface identifier in the interface list.

In some embodiments, the method further includes: receiving, from the server, a buffering instruction carrying interface verification results of the invoked interfaces after the server obtains the interface verification results by verifying request results corresponding to the historical request events based on the interface metadata; buffering the interface verification results to a verification result buffer region corresponding to the tool for querying interfaces; and displaying the interface verification results in the verification result buffer region in response to a trigger operation on the tool for querying interfaces.

In some embodiments, the method further includes: generating a request for querying an interface and carrying a keyword inputted, in response to an operation for inputting the keyword on the tool for querying interfaces; and transmitting the request for querying the interface to the server, and receiving and displaying an interface query result from the server.

In some embodiments, the method further includes: transmitting abnormal interface verification rules inputted to the server in response to an operation for inputting the abnormal interface verification rules on the tool for querying interfaces; and receiving and displaying a parameter verification result of an abnormal interface from the server.

According to embodiments of the disclosure in a fourth aspect, an apparatus for querying application programming interfaces of a webpage. The apparatus includes: a query operation responding module, configured to respond to a trigger operation on a tool for querying interfaces, and generate a request for querying the interfaces of the webpage based on a webpage corresponding to the trigger operation; a query request transmitting module, configured to transmit the request for querying the interfaces of the webpage to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back; and an interface list displaying module, configured to receive and display the interface list fed back by the server.

In some embodiments, the apparatus further includes: a first receiving unit, configured to receive, from the server, a buffering instruction carrying interface metadata after the server searches for the interface metadata based on the interface identifiers; a first obtaining unit, configured to obtain an interface list item corresponding to a display interface of the interface list; a first buffering unit, configured to buffer the interface metadata to an interface metadata buffer region corresponding to the interface list item; and a first displaying unit, configured to display, interface metadata correlated with an interface identifier in the interface list, in the interface metadata buffer region, in response to a trigger operation on the interface identifier in the interface list.

In some embodiments, the apparatus further includes: a second receiving unit, configured to receive, from the server, a buffering instruction carrying interface verification results of the invoked interfaces after the server obtains the interface verification results by verifying request results corresponding to the historical request events based on the interface metadata; a second buffering unit, configured to buffer the interface verification results to a verification result buffer region corresponding to the tool for querying interfaces; and a second displaying unit, configured to display the interface verification results in the verification result buffer region in response to a trigger operation on the tool for querying interfaces.

In some embodiments, the apparatus further includes: a first generating unit, configured to generate a request for querying an interface and carrying a keyword inputted, in response to an operation for inputting the keyword on the tool for querying interfaces; and a first receiving and displaying unit, configured to transmit the request for querying the interface to the server, and receive and display an interface query result from the server.

In some embodiments, the apparatus further includes: a first transmitting unit, configured to transmit abnormal interface verification rules inputted to the server in response to an operation for inputting the abnormal interface verification rules on the tool for querying interfaces; and a second receiving and displaying unit, configured to receive and display a parameter verification result of an abnormal interface from the server.

According to embodiments of the disclosure in a fifth aspect, an electronic device is provided. The electronic device includes a processor; and a memory for storing instructions executable by the processor. The processor is configured to execute the instructions to perform the above method.

According to embodiments of the disclosure in a sixth aspect, a storage medium is provided. When instructions in the storage medium are executed by a processor of an electronic device, the electronic device is caused to perform the above method.

According to embodiments of the disclosure in a seventh aspect, a computer program product is provided. The computer program product includes instructions executable by a processor. When instructions are executed by a processor of an electronic device, the electronic device is caused to perform the above method.

Technical solutions provided in embodiments of the disclosure at least bring the following beneficial effects.

By receiving the request for querying the interfaces of the webpage, transmitted by the client after the client responds to the trigger operation on the tool for querying interfaces, the server determines the to-be-analyzed webpage corresponding to the request for querying the interfaces of the webpage, and automatically searches for all historical request events of the to-be-analyzed webpage. Therefore, the comprehensive search on all the historical request events may be realized. The invoked interfaces of the webpage may be obtained based on the comprehensive search on all the historical request events. The invoked interfaces of the to-be-analyzed webpage may be determined based on the interface addresses invoked when performing the historical request events. The interface list including the interface identifiers of the invoked interfaces is generated. The comprehensive search on the interfaces of the to-be-analyzed webpage may be realized by triggering the tool for querying interfaces. Therefore, it may quickly find definition information of various invoked interfaces in the webpage subsequently, and the comprehensive and efficient query on the interfaces of the webpage is realized.

The client transmits the request for querying the interfaces of the webpage to the server by responding to the user's trigger operation on the tool for querying interfaces. Therefore, the server performs interface querying. The interface list of the invoked interfaces of the to-be-analyzed webpage, fed back by the server, may be obtained quickly. The client displays the interface list corresponding to the to-be-analyzed webpage by receiving the interface list of the interfaces of the webpage, fed back by the server. During the entire querying, only simple operations by the user are required to quickly obtain and comprehensively display the invoked interfaces of the webpage, which significantly improves the efficiency in querying interfaces of webpages.

It is to be understood that both the foregoing general description and the following detailed description are exemplary and explanatory only and are not restrictive of the disclosure.

### BRIEF DESCRIPTION OF THE DRAWINGS

The drawings, which are incorporated in and constitute a part of this specification, illustrate embodiments consistent with the disclosure and, together with the description, serve to explain the principles of the disclosure.
FIG. 1 is a schematic diagram illustrating an environment for implementing a method for querying interfaces of a webpage, according to some embodiments of the disclosure.
FIG. 2 is a flowchart illustrating a method for querying interfaces of a webpage, applicable to a server, according to some embodiments of the disclosure.
FIG. 3 is a flowchart illustrating a method for querying interfaces of a webpage, applicable to a server, according to some embodiments of the disclosure.
FIG. 4 is a flowchart illustrating a method for querying interfaces of a webpage, applicable to a server, according to some embodiments of the disclosure.
FIG. 5 is a flowchart illustrating a method for querying interfaces of a webpage, applicable to a server, according to some embodiments of the disclosure.
FIG. 6 is a flowchart illustrating a method for querying interfaces of a webpage, applicable to a server, according to some embodiments of the disclosure.
FIG. 7 is a flowchart illustrating a method for querying interfaces of a webpage, applicable to a client, according to some embodiments of the disclosure.
FIG. 8 is a flowchart illustrating a method for querying interfaces of a webpage, according to some embodiments of the disclosure.
FIG. 9 is a flowchart illustrating a method for querying interfaces of a webpage, according to some embodiments of the disclosure.
FIG. 10 is a flowchart illustrating a method for querying interfaces of a webpage, according to some embodiments of the disclosure.
FIG. 11 is a flowchart illustrating a method for querying interfaces of a webpage, according to some embodiments of the disclosure.
FIG. 12 is a flowchart illustrating a method for querying interfaces of a webpage, according to some embodiments of the disclosure.
FIG. 13 is a block illustrating an apparatus for querying interfaces of a webpage, according to some embodiments of the disclosure.
FIG. 14 is a block illustrating an apparatus for querying interfaces of a webpage, according to some embodiments of the disclosure.
FIG. 15 is a block illustrating an internal structure of an electronic device, according to some embodiments of the disclosure.

### DETAILED DESCRIPTION

To enable those skilled in the art to better understand technical solutions of the disclosure, technical solutions in embodiments of the disclosure will be described clearly and completely with reference to the drawings.

It should be noted that the terms such as "first" and "second" in the specification and claims of the disclosure and the above-mentioned drawings are used to distinguish similar objects, and not necessarily used to describe a specific order or sequence. It should be understood that the data used in this way may be interchanged with each other under appropriate circumstances so that the embodiments of the disclosure described herein may be implemented in a sequence other than those illustrated or described herein. The implementation manners described in the following embodiments do not represent all implementation manners consistent with the disclosure. Rather, they are merely examples of apparatuses and methods consistent with some aspects of the disclosure as detailed in the appended claims.

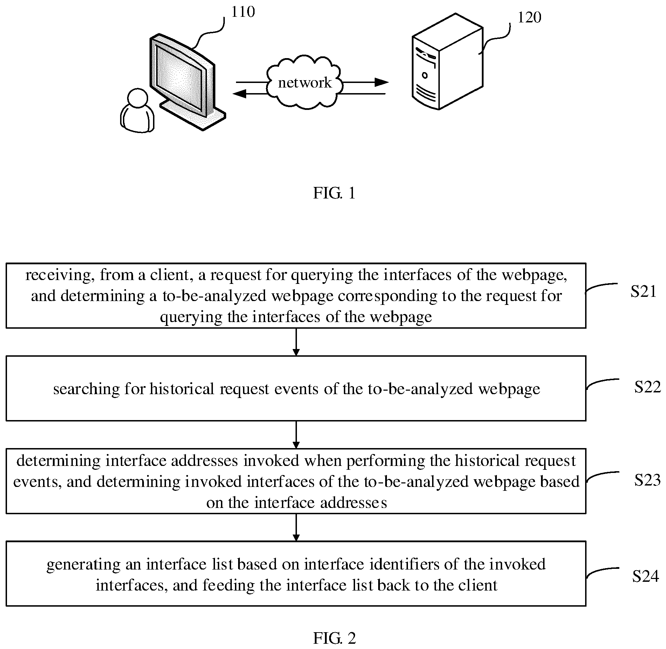

FIG. 1 is a schematic diagram illustrating an environment for implementing a method for querying interfaces of a webpage according to some embodiments of the disclosure. Referring to FIG. 1, the method may be applicable to a webpage development system. The webpage development system may include a client 110 and a server 120. The client 110 and the server 120 are coupled with each other through a network. In some embodiments, the client 110 may transmit a request for querying the interfaces of the webpage to the server 120. The server 120 may determine a to-be-analyzed webpage based on the request for querying the interfaces of the webpage, search for historical request events of the to-be-analyzed webpage, determine interface addresses invoked when performing the historical request events, determine invoked interfaces of the to-be-analyzed webpage based on the interface addresses, generate an interface list, and feed the interface list of the invoked interfaces to the client 110. The server 120 may also search for interface metadata of the invoked interfaces based on the invoked interfaces of the to-be-analyzed webpage and feed the interface metadata back to the client 110. The client 110 may receive the interface list fed back by the server 120 and displays the interface list. The client 110 responds to a trigger operation of a user on an interface identifier in the interface list, to display the interface metadata corresponding to the interface triggered. The client 110 may be a terminal capable of displaying a webpage for webpage development, such as a desktop terminal or a mobile terminal. The mobile terminal may be at least one of a mobile phone, a tablet computer, a notebook computer, and the like. The server 120 may be a server, and may be implemented by an independent server or a server cluster including multiple servers.

In some embodiments of the disclosure, the request for querying the interfaces of the webpage is generated through responding to by the client 110 a trigger operation on a tool for querying interfaces and based on a webpage corresponding to the trigger operation.

FIG. 2 is a flowchart illustrating a method for querying interfaces of a webpage according to some embodiments of the disclosure. As illustrated in FIG. 2, the method may be applicable to the server and include the following.

In block S21, a request for querying the interfaces of the webpage from the client is received, and a to-be-analyzed webpage corresponding to the request for querying the interfaces of the webpage is determined.

The request for querying the interfaces of the webpage is generated through responding to by the client a trigger operation on a tool for querying interfaces and based on a webpage corresponding to the trigger operation.

The to-be-analyzed webpage may include a webpage that may require to query interface information of APIs. For example, the to-be-analyzed webpage may be a webpage for which interface metadata of one or more interfaces is queried. For another example, the to-be-analyzed webpage may be a webpage for which all the invoked interfaces are queried. The to-be-analyzed webpage may also include a webpage that may require to verify APIs. For example, the to-be-analyzed webpage may be a webpage that needs to verify the logical correctness of one or more interfaces during the webpage development process. For another example, the to-be-analyzed webpage may also be a webpage that needs to be maintained due to an interface error that causes a webpage failure during the application process. In a display interface of the webpage, the function of querying the interfaces of the webpage may be encapsulated as a plug-in, which is the tool for querying interfaces. When the developer needs to query the interfaces in the to-be-analyzed webpage, the encapsulated plug-in may be activated to implement the querying the interfaces of the webpage. In detail, the plug-in may be set in a menu bar of the display interface of the webpage. When the developer needs to query the interfaces of the currently-opened webpage, he/she may open the menu bar, select and launch the plug-in to query the interfaces. The launching of the plug-in may be realized by directly clicking the plug-in, or by executing an operation set for the plug-in. In actual applications, the launching operation may be set based on actual needs. When the client detects that the plug-in on the webpage is launched, it responds to the query operation and generates the request for querying the interfaces of the webpage based on the currently-opened webpage. The request for querying the interfaces of the webpage carries the identification information of the to-be-analyzed webpage. The server receives the request for querying the interfaces of the webpage from the client when the client responds to the query operation. The server extracts the identification information of the to-be-analyzed webpage, carried in the request for querying the interfaces of the webpage, and determines the to-be-analyzed webpage corresponding to the request for querying the interfaces of the webpage.

In block S22, historical request events of the to-be-analyzed webpage are searched for.

The request events may refer to various requests transmitted by the webpage towards through various APIs. Transmitted objects or requested objects of the requests may be servers, other clients, and other devices that may interact through the network. The request event includes a complete process of transmitting a request to a requested object, and receiving a response result from the requested object when the requested object responds to the request. The response result includes feedback data or status code. In some embodiments, the searching for the historical request events of the to-be-analyzed webpage may be implemented through an event listening plug-in of a browser such as Google Chrome plug-in. When the extension of Chrome is opened, the Chrome plug-in subscribes all events completed by the interface requests in the current page, to guarantee to cover all interfaces used in the webpage application process. Based on the webpage identifier of the to-be-analyzed webpage, the historical request events of the to-be-analyzed webpage may be obtained by searching for all the monitored historical request events. In other embodiments, it may also be sub-installed into a plug-in corresponding to the browser based on other browsers with extended functions, such as IE browser. In some embodiments, the searched request events of the to-be-analyzed webpage may be arranged based on a chronological order or based on interfaces. Based on the interfaces used when transmitting the requests, the correspondence between the requests and the interfaces may be determined. Based on the request results, the logics of the interfaces may also be verified.

In block S23, interface addresses invoked when performing the historical request events are determined, and invoked interfaces of the to-be-analyzed webpage are determined based on the interface addresses.

Interface information may be represented by interface addresses. Metadata may also be called intermediary data or relay data, which may be data describing data and generally describing data attributes and used to support such as indicating storage location, historical data, resource search, file recording and other functions. In the webpage interaction process, the occurrence of each request event is implemented based on the API. By obtaining the interface addresses invoked when the historical request events are executed, all the invoked interfaces of the to-be-analyzed webpage may be determined. In some embodiments, historical request events may be captured based on a time sequence of the request events to obtain all the invoked interfaces of the to-be-analyzed webpage.

In block S24, an interface list is generated based on interface identifiers of the invoked interfaces, and the interface list is fed back to the client.

In some embodiments, the interface identifiers of the invoked interfaces, fed back by the server, may be implemented in form of a interface list of the webpage. All the invoked interfaces of the to-be-analyzed webpage may be determined based on the interface identifiers of the invoked interfaces. By feeding back the interface list formed by the interface identifiers of the invoked interfaces, all the interfaces of the to-be-analyzed webpage may be displayed on the client. Therefore, the quick query of the interfaces of the webpage may be realized. By determining each invoked interface of the to-be-analyzed webpage, and by feeding back the interface metadata of the invoked interface, the quick obtaining of the interface definition information may be realized.

With the method for querying the interfaces of the webpage for the server, by receiving the request for querying the interfaces of the webpage, transmitted by the client after the client responds to the trigger operation on the tool for querying interfaces, the server determines the to-be-analyzed webpage corresponding to the request for querying the interfaces of the webpage, and automatically searches for all historical request events of the to-be-analyzed webpage. Therefore, the comprehensive search on all the historical request events may be realized. The invoked interfaces of the webpage may be obtained based on the comprehensive search on all the historical request events. The invoked interfaces of the to-be-analyzed webpage may be determined based on the interface addresses invoked when performing the historical request events. The interface list including the interface identifiers of the invoked interfaces is generated. The comprehensive search on the interfaces of the to-be-analyzed webpage may be realized by triggering the tool for querying interfaces. Therefore, it may quickly find definition information of various invoked interfaces in the webpage subsequently, and the comprehensive and efficient query on the interfaces of the webpage is realized.

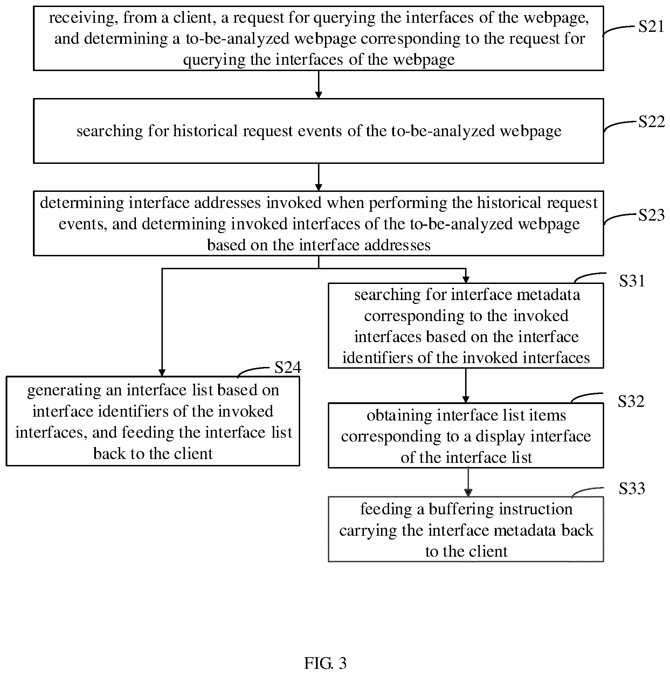

In some embodiments, the tool for querying interfaces may include an interface list item corresponding to a display interface of the interface list. As illustrated in FIG. 3, after determining the interface addresses invoked when performing the historical request events and determining the invoked interfaces of the to-be-analyzed webpage based on the interface addresses, the method further include the actions in blocks S31 and S32.

In block S31, interface metadata corresponding to the invoked interfaces are searched for based on the interface identifiers of the invoked interfaces.

In block S32, an interface list item corresponding to a display interface of the interface list are obtained.

In block S33, a buffering instruction carrying the interface metadata is fed back to the client.

The tool for querying interfaces may include a plurality of functions. The interface list item may be a function corresponding to the display interface of the interface list in the tool for querying interfaces. By triggering the interface identifier in the interface list displayed in the display interface corresponding to the interface list item, the interface metadata corresponding the triggered interface identifier may be obtained from the interface metadata buffer region corresponding to the interface list item. In detail, the buffering instruction carrying the interface metadata of the invoked interfaces is configured to make the client buffer the interface metadata to the interface metadata buffer region corresponding to the interface list item. Buffer locations of the interface metadata in the interface metadata buffer region are correlated with the interface identifiers, and the interface metadata buffer region is configured to display correlated interface metadata when an interface identifier in the interface list item is triggered.

The interface metadata may include description information such as interface definition, interface parameter types, parameter definition, interface feedback data definition, feedback data schema. In some embodiments, the interface metadata may be defined during the webpage development process and stored in the server. In some embodiments, the interface identifier may be represented by the interface address, or a predefined interface name or interface code. A database storing interface metadata may be traversed based on the interface identifier to query the interface metadata and to obtain data that matches the interface identifier, that is, the interface metadata corresponding to the invoked interface. In some embodiments, the interface identifiers and the interface metadata of the to-be-analyzed webpage may be transmitted to the client at the same time. The interface metadata may be buffered to the buffer locations associated with the interface identifiers in the interface metadata buffer region corresponding to the interface list item, which is convenient to realize the quick search of the interface metadata. In some specific embodiments, after receiving the interface identifiers and interface metadata of the to-be-analyzed webpage, the client first displays the interface list including the interface identifiers of the to-be-analyzed webpage. When the user triggers any interface identifier in the interface list, the client responds to the trigger operation, and displays the interface metadata corresponding to the triggered interface identifier which is buffered in the buffer location based on the buffer location associated with the interface identifier in the interface metadata buffer region corresponding to the interface list item, which saves the space for displaying the data and realizes the purposeful data display. In some embodiments, searching for the interface metadata corresponding to the invoked interfaces based on the interface identifiers of the invoked interfaces may include: generating a request for obtaining interface metadata based on the interface identifiers of the invoked interfaces and transmitting the request to an interface management platform; and receiving the interface metadata fed back by the interface management platform in response to the request for obtaining the interface metadata.

The interface management platform refers to a data platform used for interface definition or management. In the webpage development process, various interface information that needs to be used may be defined in advance, including description information such as interface definition, interface parameter types, parameter definition, interface feedback data definition, feedback data schema. The defined interface information is the interface metadata. Through the interface management platform, the unified management on the interface information may be realized, which is convenient for adding, deleting, modifying, and checking the interface information. The interface management platform may search for the corresponding interface based on the interface identifier such as the interface address or interface name, to obtain the interface metadata corresponding to the interface. In some embodiments, the server and the interface management platform may be distributed on two different devices, and the devices are coupled to each other through the network. The server may generate a request for obtaining interface metadata based on the interface address and transmit the request to the interface management platform. After receiving the request, the interface management platform may extract the interface identifier carried in the interface metadata, and search for the corresponding interface based on the interface identifier, determine the interface metadata, and feed the interface metadata to the server. In some embodiments, the interface management platform may be as a part of the server. The server requests the interface identifier of the corresponding interface and transmits the interface identifier to the interface management platform. The interface management platform searches for the corresponding interface based on the interface identifier and determines the interface metadata.

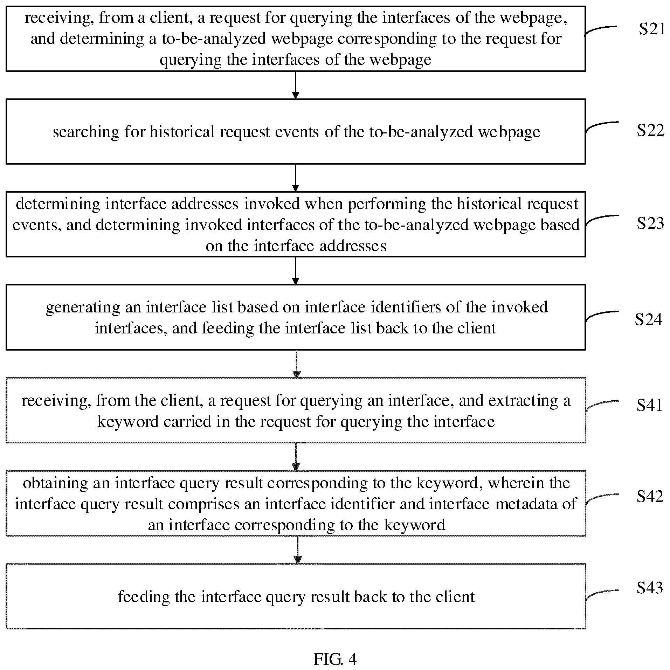

In some embodiments, as illustrated in FIG. 4, the tool for querying interfaces includes an interface search item. After the interface identifiers of the invoked interfaces are fed back to the client, the method further includes actions in blocks S41 to S43.

In block S41, a request for querying an interface from the client is received, and a keyword carried in the request for querying the interface is extracted.

The request for querying the interface is generated by the client in response to a keyword inputting operation of the interface search item.

In block S42, an interface query result corresponding to the keyword is obtained, in which the interface query result includes an interface identifier and interface metadata of an interface corresponding to the keyword.

In block S43, the interface query result is fed back to the client.

Through searching for the request events on the to-be-analyzed webpage, the interface identifiers of various interfaces used in the to-be-analyzed webpage may be obtained. For the interface that does not exist or is not used in the webpage, the interface metadata may be queried by a keyword searching manner through the interface search item in the tool for querying interfaces. In some embodiments, the keyword includes an interface identifier, an interface path, and the like. In some embodiments, the user may enter the keyword corresponding to the interface to be queried, such as the interface path or interface name of the interface to be queried, through the search information inputting box displayed on the corresponding display interface of the interface search item of the client, and then clicks to search. In response to the interface search operation, the client generates the request for querying the interface which carries the keyword and transmits the request to the server. The server extracts the keyword carried in the request for querying the interface, and searches for the interface identifier and interface metadata corresponding to the keyword. The searched interface identifier and interface metadata may be used as the interface query result and fed back to the client.

In some embodiments, the interface query result corresponding to the keyword may be obtained through the query processing of the interface management platform. The server generates a request for querying an interface based on the keyword and transmits it to the interface management platform. The interface management platform extracts the keyword in the request, traverses the stored interface identifiers, and obtains the interface address identifier corresponding to the keyword and the interface metadata corresponding to the interface address identifier, and feed them back to the server. The server receives the interface query result fed back by the interface management platform and forwards the interface query result to the client.

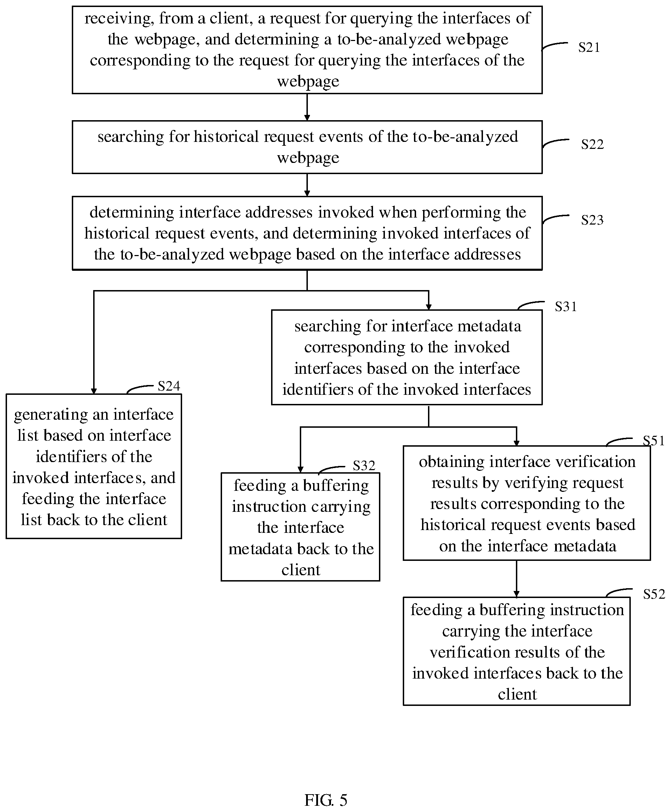

In some embodiments, as illustrated in FIG. 5, the tool for querying interfaces includes a parameter verification item. After searching for the interface metadata corresponding to the invoked interfaces based on the interface identifiers of the invoked interfaces, the method further includes the actions in blocks S51 to S52.

In block S51, interface verification results are obtained by verifying request results corresponding to the historical request events based on the interface metadata.

In block S52, a buffering instruction carrying the interface verification results of the invoked interfaces is fed back to the client.

The buffering instruction carrying the interface verification results of the invoked interfaces is used to enable the client to buffer the interface verification results to a verification result buffer region corresponding to the parameter verification item.

The request result includes an interface status code and feedback parameters. The interface status code may include a request error status code, a server error status code, and the like, such as 404, 500, where 404 indicates that the webpage or file is not found, and 500 indicates an internal error in the server. When a status code characterizing an error is received, the interface is an abnormal interface, and the interface verification result of the abnormal state is obtained. When the request result is feedback parameters, the feedback parameters may be verified based on the interface metadata corresponding to the interface. The request result may include passing parameters requested and feedback data. The verification process includes as follows. It is verified whether necessary parameters are missing in the passing parameters requested and whether the data formats of the feedback data are correct, and the like, to obtain the interface verification results. The interface verification results may be fed back to the client. The client buffers the interface verification results to the verification result buffer region corresponding to the parameter verification item. When the user triggers the parameter verification item, the client responds to the trigger operation on the parameter verification item to quickly obtain the interface verification results of the invoked interfaces of the webpage.

In some embodiments, the interface metadata of the invoked interface and the interface verification result of the invoked interface have a corresponding relationship. The server may simultaneously feed the interface list, the interface metadata of the invoked interfaces, and the interface verification results, of the to-be-analyzed webpage, to the client.

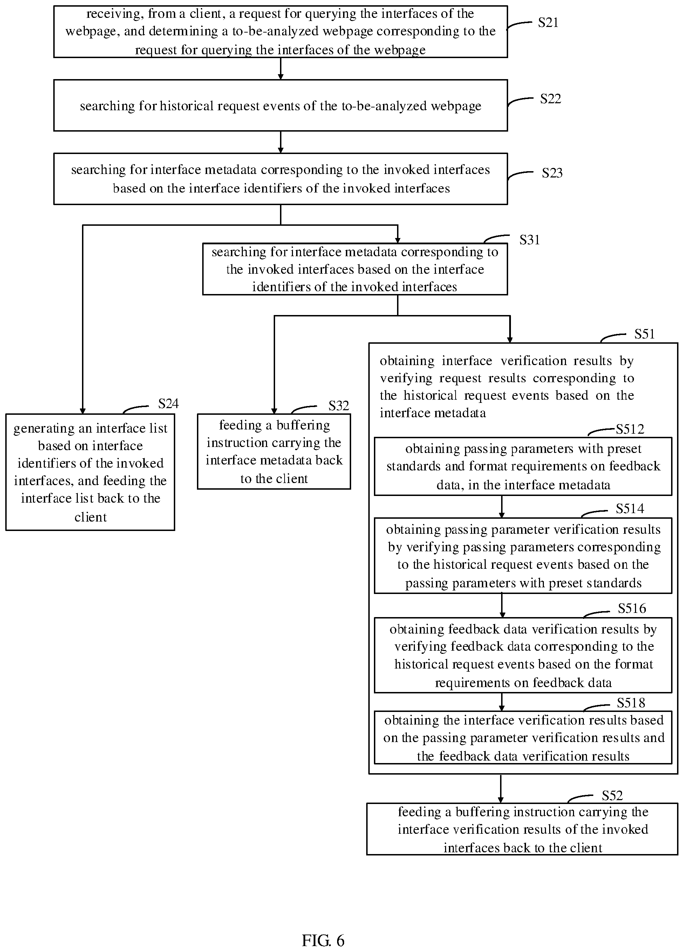

In some embodiments, as illustrated in FIG. 6, obtaining the interface verification results by verifying the request results corresponding to the historical request events based on the interface metadata may include the actions in blocks S512 to S518.

In block S512, passing parameters with preset standards and format requirements on feedback data, in the interface metadata, are obtained.

In block S514, passing parameter verification results are obtained by verifying passing parameters corresponding to the historical request events based on the passing parameters with preset standards.

In block S516, feedback data verification results are obtained by verifying feedback data corresponding to the historical request events based on the format requirements on feedback data.

In block S518, the interface verification results are obtained based on the passing parameter verification results and the feedback data verification results.

The passing parameters with preset standards may refer to parameters that must be transmitted as determined in the interface information definition. The format requirements on feedback data may refer to the data format of each specific parameter, such as a long integer, a short integer, an unsigned integer. For example, a certain parameter must be transmitted, but this parameter is not passed in the request result. For another example, the format of a certain parameter is defined as the long integer, but the data format of the corresponding feedback data is the short integer, that is, the parameter format is incorrect. The passing parameters corresponding to the historical request events may be verified based on the passing parameters with preset standards to determine whether the necessary parameters are missing. For example, parameters defined in the interface metadata must include ID, but the parameter actually passed in the request does not include ID. The interface invoked by the request event lacks the passing parameters with preset standards and the passing parameter verification result is that the verification is not passed. The data format of each feedback data may be defined in the interface metadata. For example, if the requested parameter is time, the corresponding data format in the feedback data of the request event should be the format corresponding to the time, such as 2019-11-11. If the data format corresponding to the feedback data is text or other format data, the feedback data verification result is that the verification is not passed. For an interface where any of the above situations occurs, the interface verification result of the request event is that the verification fails or is not passed. It should be understood that, in other embodiments, the interface may also be verified based on other definition information of the interface metadata except for the passing parameters with preset standards and the format requirements on feedback data. When the passing parameters and the feedback data corresponding to the historical request event satisfy rules defined in the interface metadata, the interface verification is passed.

In some embodiments, the tool for querying interfaces includes an abnormal interface item. After searching for the historical request events of the to-be-analyzed webpage, the method further includes: obtaining an abnormal request event that a corresponding request result carries an abnormal status code from the historical request events; identifying an abnormal interface corresponding to the abnormal request event, and determining abnormal interface data; and feeding a buffering instruction carrying the abnormal interface data back to the client, so that the client buffers the abnormal interface data to a data buffer region. When the user triggers the abnormal interface item, the client responds to the trigger operation on the abnormal interface item to quickly obtain the abnormal interface data of the webpage from the data buffer region corresponding to the abnormal interface item.

The abnormal interface data includes an abnormal status code. The abnormal status code includes a request error status code, a server error status code, etc. The request error status code may include 400-418, 421-426, 449, and 451. The server error status code may include 500-510 and 600. For example, 404 means that the webpage or file is not found. For another example, 500 means that the server has an internal error. When the received result carries a status code representing an error, the request event is an abnormal request event, and the interface corresponding to the abnormal event is an abnormal interface.

In some embodiments, after identifying the abnormal interface corresponding to the abnormal request event, the method further includes: receiving, from the client, abnormal interface verification rules; running the abnormal interface verification rules, and obtaining a parameter verification result of the abnormal interface by verifying parameters in the abnormal interface; and feeding the parameter verification result of the abnormal interface to the client.

When an abnormal interface is detected, the interface may not be verified by the feedback data. The abnormal interface verification rules corresponding to the abnormal interface may be obtained. The abnormal interface verification rules may be pre-configured and stored in the interface management platform. The abnormal interface verification rules may be obtained from the interface management platform based in the identifier of the abnormal interface. The abnormal interface verification rules may be running. The abnormal interface may be verified on the parameters. Through the above manner, it is possible to implement interface verification for abnormal interfaces that may not normally perform request interaction.

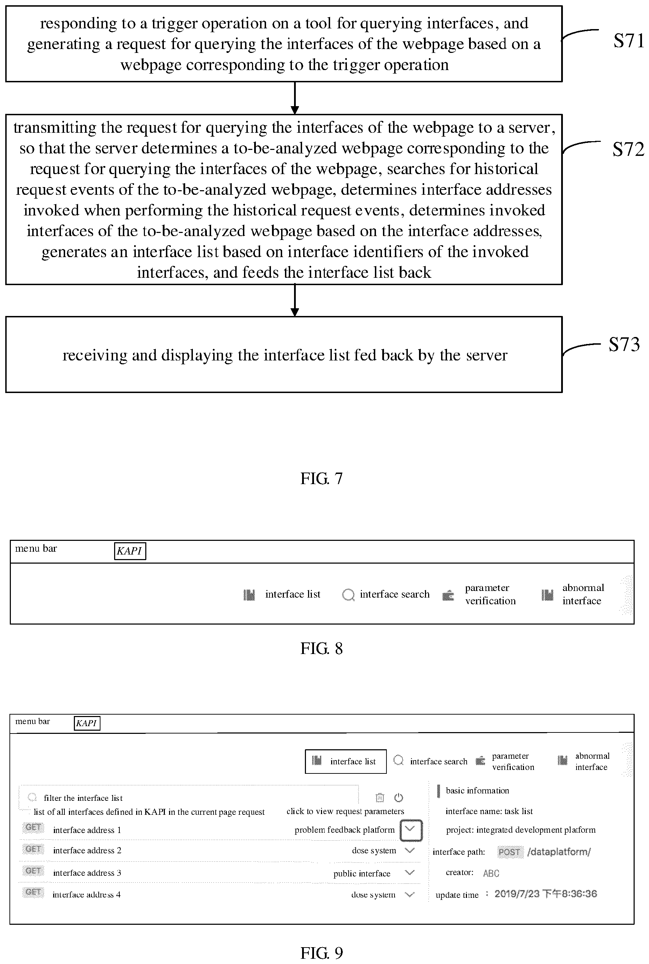

FIG. 7 is a flowchart illustrating a method for querying interfaces of a webpage, according to some embodiments of the disclosure. As illustrated in FIG. 7, the method is applicable to a client and includes the following.

In block S71, a trigger operation on a tool for querying interfaces is responded to, and a request for querying the interfaces of the webpage is generated based on a webpage corresponding to the trigger operation.

In block S72, the request for querying the interfaces of the webpage is transmitted to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back.

In block S73, the interface list fed back by the server is received and displayed.

The function for querying the interfaces of the webpage may be encapsulated as a plug-in in the display interface of the webpage. When the developer needs to query the interfaces of the to-be-analyzed webpage, the encapsulated plug-in may be activated to query the interfaces of the webpage. In detail, the plug-in may be set in a menu bar of the display interface of the webpage. When the developer needs to query interfaces of the currently-opened webpage, he/she may open the menu bar, select and launch the plug-in. When the client detects that the plug-in in the webpage is launched, it responds to the query operation and generates the request for querying the interfaces of the webpage based on the currently-opened to-be-analyzed webpage. The request for querying the interfaces of the webpage may carry identification information of the to-be-analyzed webpage. The server may receive the request for querying the interfaces of the webpage, transmitted by the client in response to the query operation, and determines the to-be-analyzed webpage corresponding to the request for querying the interfaces of the webpage by extracting the identification information carried in the request for querying the interfaces of the webpage. The server determines the to-be-analyzed webpage based on the request for querying the interfaces of the webpage, searches for the historical request events of the to-be-analyzed webpage, and obtains the interface identifiers of the interfaces of the events. The server transmits the interface list including the interface identifiers to the client to display the interface identifier list of the invoked interfaces of the to-be-analyzed webpage.

With the method for querying the interfaces of the webpage for the server, the client transmits the request for querying the interfaces of the webpage to the server by responding to the user's trigger operation on the tool for querying interfaces. Therefore, the server performs interface querying. The interface list of the invoked interfaces of the to-be-analyzed webpage, fed back by the server, may be obtained quickly. The client displays the interface list corresponding to the to-be-analyzed webpage by receiving the interface list of the interfaces of the webpage, fed back by the server. During the entire querying, only simple operations by the user are required to quickly obtain and comprehensively display the invoked interfaces of the webpage, which significantly improves the efficiency in querying interfaces of webpages.

In some embodiments, the client is also configured to receive the interface metadata which are searched for by the server based on the interface identifiers. The server feeds the interface list of the webpage and the interface metadata back to the client, so that the client displays the interface list on the query operation display interface. The developer may directly view the interface identifiers of all interfaces in the webpage based on the displayed interface list. When the developer needs to view the interface metadata of an interface in the interface list, he/she may directly trigger the interface identifier in the interface list displayed, and the client responds to the trigger operation of the interface identifier to display the interface metadata of the interface corresponding to the interface identifier.

In some embodiments, the tool for querying interfaces includes an interface list item corresponding to the display interface of the interface list. After the client receives the interface metadata which are searched for by the server based on the interface identifiers, the client receives a buffering instruction carrying the interface metadata, fed back by the server; obtains an interface list item corresponding to a display interface of the interface list; buffers the interface metadata to an interface metadata buffer region corresponding to the interface list item; and displays, interface metadata correlated with an interface identifier in the interface list, in the interface metadata buffer region, in response to a trigger operation on the interface identifier in the interface list.

In some embodiments, the feedback data also includes interface verification data. When it is detected that the user triggers a certain interface identifier on the display interface of the interface list, the client responds to the trigger operation of the interface identifier to display the interface verification result corresponding to the interface of the interface identifier.

In some embodiments, after the client receives interface verification which is obtained by verifying through the server request results corresponding to the historical request events based on the interface metadata, the client receive, from the server, a buffering instruction carrying interface verification results of the invoked interfaces; buffers the interface verification results to a verification result buffer region corresponding to the parameter verification item in the tool for querying interfaces; and displays the interface verification results in the verification result buffer region in response to a trigger operation on the tool for querying interfaces.

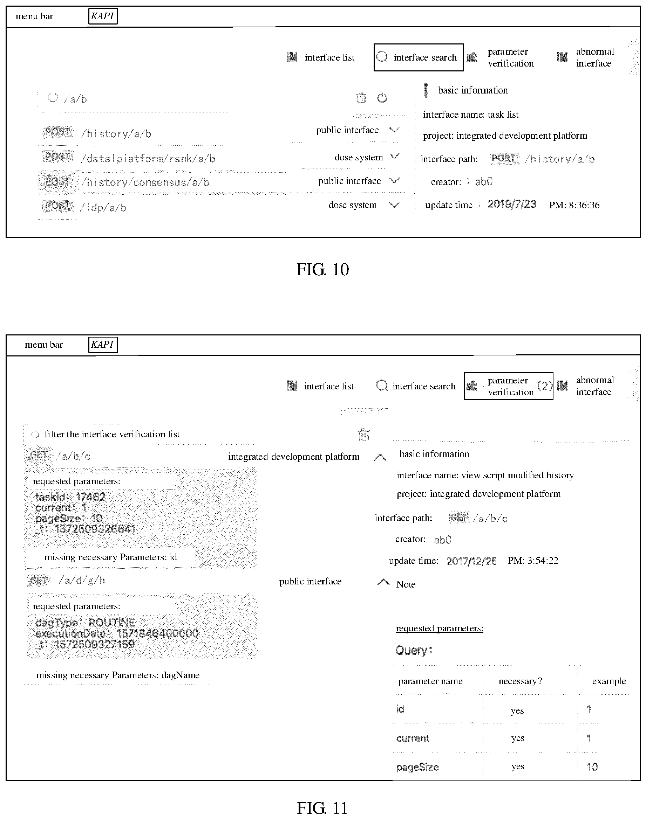

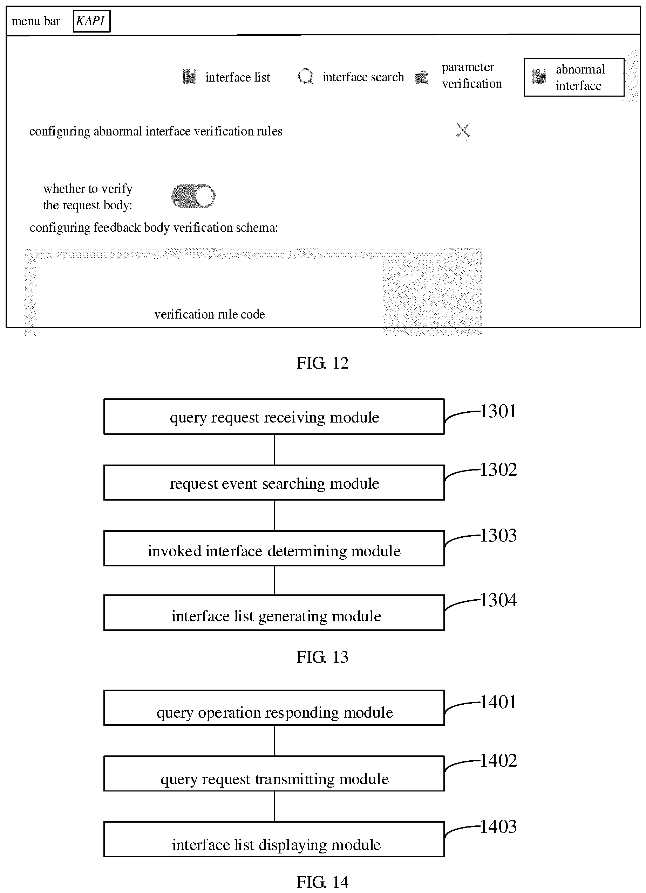

In other embodiments, as illustrated in FIG. 8, the plug-in "KAPI" for querying the interfaces of the webpage may be taken as an example. When it is detected that "KAPI" is triggered, the query operation is responded to display a KAPI panel. The KAPI panel includes 4 function items, which are interface list, interface search, parameter verification, and abnormal interface. As illustrated in FIG. 9, the interface list displays interface identifiers of all interfaces in the interface list fed back by the server. When any interface identifier in the interface list is clicked, the interface metadata of the interface corresponding to the interface identifier may be displayed in the preset window position. It should be understood that in the actual application process, the click operation may also be other setting operations, for example, controlling the cursor to move to the display position of the interface identifier in the interface list. As illustrated in FIG. 10, the client responds to the user's click on "interface search" to display the interface search interface, generates and transmits the request for querying the interface to the server based on the inputted keyword, so that the server may obtain the interface identifier corresponding to the keyword based on the request for querying the interface and the interface metadata corresponding to the interface identifier, feed this information back to the client, and feed the interface query result including the interface identifier corresponding to the keyword and the interface metadata back to the client. The client receives the interface query result and display the interface identifier and interface metadata corresponding to the keyword on the interface search interface. It supports searching for a certain interface definition based on the keyword, so that the developer may quickly understand the definition of certain interfaces that are not in the current webpage. As illustrated in FIG. 11, the number of interfaces that the verification fails may be displayed in the parameter verification function item, so that the developer may quickly understand the number of interfaces that the verification fails. In detail, the client receives the interface verification results fed back by the server, determines the number of interfaces that the verification fails, generates a number prompt label, and adds it to the preset position in the parameter verification function item, such as the upper right corner of the parameter verification function item or after the item name. The client responds to the user's operation of clicking the parameter verification function item, and displays the data details of each interface that the verification fails, including the requested passing parameters and feedback data, and the reason for the verification failure, such as missing necessary parameters. As illustrated in FIG. 12, for the abnormal interface, the corresponding verification rules may be configured. The server receives and runs the verification rules configured by the terminal to verify the abnormal interface.

FIG. 13 is a block illustrating an apparatus for querying interfaces of a webpage, according to some embodiments of the disclosure. Referring to FIG. 13, the apparatus includes a query request receiving module 1301, a request event searching module 1302, an invoked interface determining module 1303, and an interface list generating module 1304.

The query request receiving module 1301 is configured to receive, from a client, a request for querying the interfaces of the webpage, and determine a to-be-analyzed webpage corresponding to the request for querying the interfaces of the webpage.

The request event searching module 1302 is configured to search for historical request events of the to-be-analyzed webpage.

The invoked interface determining module 1303 is configured to determine interface addresses invoked when performing the historical request events, and determine invoked interfaces of the to-be-analyzed webpage based on the interface addresses.

The interface list generating module 1304 is configured to generate an interface list based on interface identifiers of the invoked interfaces, and feed the interface list back to the client.

In some embodiments, the request for querying the interfaces of the webpage is generated through responding to by the client a trigger operation on a tool for querying interfaces and based on a webpage corresponding to the trigger operation.

In some embodiments, the tool for querying interfaces includes an interface list item corresponding to the display interface of the interface list. The apparatus further includes: an interface metadata searching module, configured to search for interface metadata corresponding to the invoked interfaces based on the interface identifiers of the invoked interfaces; an interface list item obtaining module, configured to obtain an interface list item corresponding to a display interface of the interface list; and an interface metadata feeding module, configured to feed a buffering instruction carrying the interface metadata back to the client, so that the client buffers the interface metadata to an interface metadata buffer region corresponding to the interface list item, in which buffer locations of the interface metadata in the interface metadata buffer region are correlated with the interface identifiers, and the interface metadata buffer region is configured to display correlated interface metadata when an interface identifier in the interface list item is triggered.

In some embodiments, the tool for querying interfaces includes a parameter verification item. The apparatus further includes: an interface verifying module, configured to obtain interface verification results by verifying request results corresponding to the historical request events based on the interface metadata; and a verification result feeding module, configured to feed a buffering instruction carrying the interface verification results of the invoked interfaces back to the client, so that the client buffers the interface verification results to a verification result buffer region.

In some embodiments, the interface verifying module includes: a parameter-requirement obtaining unit, configured to obtain passing parameters with preset standards and format requirements on feedback data, in the interface metadata; a passing parameter verifying unit, configured to obtain passing parameter verification results by verifying passing parameters corresponding to the historical request events based on the passing parameters with preset standards; a feedback data verifying unit, configured to obtain feedback data verification results by verifying feedback data corresponding to the historical request events based on the format requirements on feedback data; and an interface verification result obtaining unit, configured to obtain the interface verification results based on the passing parameter verification results and the feedback data verification results.

In some embodiments, the tool for querying interfaces includes an interface search item. The apparatus further includes an interface searching module. The interface searching module includes: a keyword extracting unit, configured to receive, from the client, a request for querying an interface, and extract a keyword carried in the request for querying the interface; a querying unit, configured to obtain an interface query result corresponding to the keyword, in which the interface query result includes an interface identifier and interface metadata of an interface corresponding to the keyword; and a query result feeding unit, configured to feed the interface query result back to the client.

In some embodiments, the tool for querying interfaces includes an abnormal interface item. The apparatus further includes an abnormal interface identifying module. The abnormal interface identifying module includes: an abnormal request event obtaining unit, configured to obtain an abnormal request event that a corresponding request result carries an abnormal status code from the historical request events; an abnormal interface identifying unit, configured to identify an abnormal interface corresponding to the abnormal request event, and determine abnormal interface data; and an abnormal interface feeding unit, configured to feed a buffering instruction carrying the abnormal interface data back to the client, so that the client buffers the abnormal interface data to a data buffer region.

In some embodiments, the apparatus further includes an abnormal interface parameter verifying module. The abnormal interface parameter verifying module includes: a verification rule obtaining unit, configured to receive, from the client, abnormal interface verification rules; an abnormal interface parameter verifying unit, configured to run the abnormal interface verification rules, and obtain a parameter verification result of the abnormal interface by verifying parameters in the abnormal interface; and a verification result feeding unit, configured to feed the parameter verification result of the abnormal interface to the client.

With the apparatus for querying the interfaces of the webpage for the server, by receiving the request for querying the interfaces of the webpage, transmitted by the client after the client responds to the trigger operation on the tool for querying interfaces, the server determines the to-be-analyzed webpage corresponding to the request for querying the interfaces of the webpage, and automatically searches for all historical request events of the to-be-analyzed webpage. Therefore, the comprehensive search on all the historical request events may be realized. The invoked interfaces of the webpage may be obtained based on the comprehensive search on all the historical request events. The invoked interfaces of the to-be-analyzed webpage may be determined based on the interface addresses invoked when performing the historical request events. The interface list including the interface identifiers of the invoked interfaces is generated. The comprehensive search on the interfaces of the to-be-analyzed webpage may be realized by triggering the tool for querying interfaces. Therefore, it may quickly find definition information of various invoked interfaces in the webpage subsequently, and the comprehensive and efficient query on the interfaces of the webpage is realized.

FIG. 14 is a block illustrating an apparatus for querying interfaces of a webpage, according to some embodiments of the disclosure. Referring to FIG. 14, the apparatus includes a query operation responding module 1401, a query request transmitting module 1402, and an interface list displaying module 1403.

The query operation responding module 1401 is configured to respond to a trigger operation on a tool for querying interfaces, and generate a request for querying the interfaces of the webpage based on a webpage corresponding to the trigger operation.

The query request transmitting module 1402 is configured to transmit the request for querying the interfaces of the webpage to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back.

The interface list displaying module 1403 is configured to receive and display the interface list fed back by the server.

In some embodiments, the tool for querying interfaces includes an interface list item corresponding to the display interface of the interface list, and the apparatus further includes: a first receiving unit, configured to receive, from the server, a buffering instruction carrying interface metadata after the server searches for the interface metadata based on the interface identifiers; a first obtaining unit, configured to obtain an interface list item corresponding to a display interface of the interface list; a first buffering unit, configured to buffer the interface metadata to an interface metadata buffer region corresponding to the interface list item; and a first displaying unit, configured to display, interface metadata correlated with an interface identifier in the interface list, in the interface metadata buffer region, in response to a trigger operation on the interface identifier in the interface list.

In some embodiments, the apparatus further includes: a second receiving unit, configured to receive, from the server, a buffering instruction carrying interface verification results of the invoked interfaces after the server obtains the interface verification results by verifying request results corresponding to the historical request events based on the interface metadata; a second buffering unit, configured to buffer the interface verification results to a verification result buffer region corresponding to the tool for querying interfaces; and a second displaying unit, configured to display the interface verification results in the verification result buffer region in response to a trigger operation on the tool for querying interfaces.

In some embodiments, the apparatus further includes: a first generating unit, configured to generate a request for querying an interface and carrying a keyword inputted, in response to an operation for inputting the keyword on the tool for querying interfaces; and a first receiving and displaying unit, configured to transmit the request for querying the interface to the server, and receive and display an interface query result from the server.

In some embodiments, the apparatus further includes: a first transmitting unit, configured to transmit abnormal interface verification rules inputted to the server in response to an operation for inputting the abnormal interface verification rules on the tool for querying interfaces; and a second receiving and displaying unit, configured to receive and display a parameter verification result of an abnormal interface from the server.

With the apparatus for querying the interfaces of the webpage for the server, the client transmits the request for querying the interfaces of the webpage to the server by responding to the user's trigger operation on the tool for querying interfaces. Therefore, the server performs interface querying. The interface list of the invoked interfaces of the to-be-analyzed webpage, fed back by the server, may be obtained quickly. The client displays the interface list corresponding to the to-be-analyzed webpage by receiving the interface list of the interfaces of the webpage, fed back by the server. During the entire querying, only simple operations by the user are required to quickly obtain and comprehensively display the invoked interfaces of the webpage, which significantly improves the efficiency in querying interfaces of webpages.

With respect to the apparatuses in the above embodiments, the specific manners for performing operations for individual modules therein have been described in detail in the embodiments regarding the methods, which will not be elaborated herein.

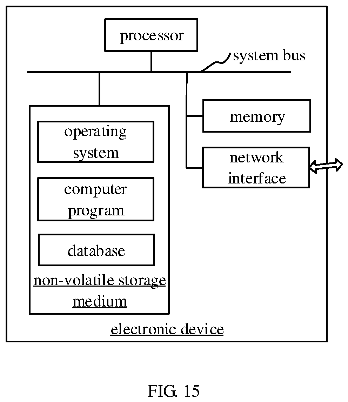

FIG. 15 is a block illustrating an internal structure of an electronic device, according to some embodiments of the disclosure. As illustrated in FIG. 15, in some embodiments, the electronic device is provided. The electronic device may be a server, and its internal structure diagram may be as illustrated in FIG. 15. The electronic device includes a processor, a memory unit, a network interface, and a database connected through a system bus. The processor of the electronic device is configured to provide calculation and control capabilities. The memory unit of the electronic device includes a non-volatile storage medium and an internal memory. The non-volatile storage medium stores an operating system, a computer program, and a database. The internal memory provides an environment for operations of the operating system and computer program in the non-volatile storage medium. The database of the electronic device is configured to store the characteristic information data of each interface. The network interface of the electronic device is configured to communicate with an external terminal through a network connection. The computer program is executed by the processor to realize the above method.

Those skilled in the art may understand that the structure in FIG. 15 is only a block diagram of part of the structure related to the solution of the disclosure, and does not constitute a limitation on the electronic device to which the solution of the disclosure is applied. The specific electronic device may include more or less parts than shown in FIG., or combine some parts, or have a different part arrangement.

In some embodiments, an electronic device is provided, including: a processor; and a memory for storing instructions executable by the processor. The processor is configured to execute the instructions to perform the above method.

In some embodiments, a storage medium is provided. When instructions in the storage medium are executed by a processor of an electronic device, the electronic device is caused to perform the above method.

In some embodiments, a computer program product is provided. The computer program product includes instructions executable by a processor. When instructions are executed by a processor of an electronic device, the electronic device is caused to perform the above method.

Those skilled in the art may easily think of other embodiments of the disclosure after considering the description and practicing the disclosure disclosed herein. The disclosure is intended to cover any variations, uses, or adaptive changes of the disclosure. These variations, uses, or adaptive changes follow the general principles of the disclosure and include common knowledge or conventional technical means in the technical field that are not disclosed in the disclosure. The description and the embodiments are only to be regarded as exemplary, and the true scope and spirit of the disclosure are pointed out by the following claims.

It should be understood that the disclosure is not limited to the precise structure that has been described above and shown in the drawings, and various modifications and changes may be made without departing from its scope. The scope of the disclosure is only limited by the appended claims.

## Claims

1. A method for querying application programming interfaces of a webpage, comprising:
receiving, from a client, a request for querying the interfaces of the webpage, and determining a to-be-analyzed webpage corresponding to the request for querying the interfaces of the webpage;
searching for historical request events of the to-be-analyzed webpage;
determining interface addresses invoked when performing the historical request events, and determining invoked interfaces of the to-be-analyzed webpage based on the interface addresses; and
generating an interface list based on interface identifiers of the invoked interfaces, and feeding the interface list back to the client.

2. The method as claimed in claim 1, wherein the request for querying the interfaces of the webpage is generated through responding to by the client a trigger operation on a tool for querying interfaces and based on a webpage corresponding to the trigger operation.

3. The method as claimed in claim 2, after determining the invoked interfaces of the to-be-analyzed webpage based on the interface addresses invoked when performing the historical request events, further comprising:
searching for interface metadata corresponding to the invoked interfaces based on the interface identifiers of the invoked interfaces;
obtaining an interface list item corresponding to a display interface of the interface list; and
feeding a buffering instruction carrying the interface metadata back to the client, so that the client buffers the interface metadata to an interface metadata buffer region corresponding to the interface list item, wherein buffer locations of the interface metadata in the interface metadata buffer region are correlated with the interface identifiers, and the interface metadata buffer region is configured to display correlated interface metadata when an interface identifier in the interface list item is triggered.

4. The method as claimed in claim 3, after searching for the interface metadata corresponding to the invoked interfaces based on the interface identifiers of the invoked interfaces, further comprising:
obtaining interface verification results by verifying request results corresponding to the historical request events based on the interface metadata; and
feeding a buffering instruction carrying the interface verification results of the invoked interfaces back to the client, so that the client buffers the interface verification results to a verification result buffer region.

5. The method as claimed in claim 4, wherein obtaining the interface verification results by verifying the request results corresponding to the historical request events based on the interface metadata comprises:
obtaining passing parameters with preset standards and format requirements on feedback data, in the interface metadata;
obtaining passing parameter verification results by verifying passing parameters corresponding to the historical request events based on the passing parameters with preset standards;
obtaining feedback data verification results by verifying feedback data corresponding to the historical request events based on the format requirements on feedback data; and
obtaining the interface verification results based on the passing parameter verification results and the feedback data verification results.

6. The method as claimed in any one of claims 1 to 5, after feeding the interface identifiers of the invoked interfaces back to the client, further comprising:
receiving, from the client, a request for querying an interface, and extracting a keyword carried in the request for querying the interface;
obtaining an interface query result corresponding to the keyword, wherein the interface query result comprises an interface identifier and interface metadata of an interface corresponding to the keyword; and
feeding the interface query result back to the client.

7. The method as claimed in any one of claims 1 to 6, after searching for the historical request events of the to-be-analyzed webpage, further comprising:
obtaining an abnormal request event that a corresponding request result carries an abnormal status code from the historical request events;
identifying an abnormal interface corresponding to the abnormal request event, and determining abnormal interface data; and
feeding a buffering instruction carrying the abnormal interface data back to the client, so that the client buffers the abnormal interface data to a data buffer region.

8. The method as claimed in claim 7, after identifying the abnormal interface corresponding to the abnormal request event, further comprising:
receiving, from the client, abnormal interface verification rules;
running the abnormal interface verification rules, and obtaining a parameter verification result of the abnormal interface by verifying parameters in the abnormal interface; and
feeding the parameter verification result of the abnormal interface to the client.

9. A method for querying application programming interfaces of a webpage, comprising:
responding to a trigger operation on a tool for querying interfaces, and generating a request for querying the interfaces of the webpage based on a webpage corresponding to the trigger operation;
transmitting the request for querying the interfaces of the webpage to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back; and
receiving and displaying the interface list fed back by the server.

10. The method as claimed in claim 9, further comprising:
receiving, from the server, a buffering instruction carrying interface metadata after the server searches for the interface metadata based on the interface identifiers;
obtaining an interface list item corresponding to a display interface of the interface list;
buffering the interface metadata to an interface metadata buffer region corresponding to the interface list item; and
displaying, interface metadata correlated with an interface identifier in the interface list, in the interface metadata buffer region, in response to a trigger operation on the interface identifier in the interface list.

11. The method as claimed in claim 9, further comprising:
receiving, from the server, a buffering instruction carrying interface verification results of the invoked interfaces after the server obtains the interface verification results by verifying request results corresponding to the historical request events based on the interface metadata;
buffering the interface verification results to a verification result buffer region corresponding to the tool for querying interfaces; and
displaying the interface verification results in the verification result buffer region in response to a trigger operation on the tool for querying interfaces.

12. The method as claimed in claim 9, further comprising:
generating a request for querying an interface and carrying a keyword inputted, in response to an operation for inputting the keyword on the tool for querying interfaces; and
transmitting the request for querying the interface to the server, and receiving and displaying an interface query result from the server.

13. The method as claimed in claim 9, further comprising:
transmitting abnormal interface verification rules inputted to the server in response to an operation for inputting the abnormal interface verification rules on the tool for querying interfaces; and
receiving and displaying a parameter verification result of an abnormal interface from the server.

14. An apparatus for querying application programming interfaces of a webpage, comprising:
a query request receiving module, configured to receive, from a client, a request for querying the interfaces of the webpage, and determine a to-be-analyzed webpage corresponding to the request for querying the interfaces of the webpage;
a request event searching module, configured to search for historical request events of the to-be-analyzed webpage;
an invoked interface determining module, configured to determine interface addresses invoked when performing the historical request events, and determine invoked interfaces of the to-be-analyzed webpage based on the interface addresses; and
an interface list generating module, configured to generate an interface list based on interface identifiers of the invoked interfaces, and feed the interface list back to the client.

15. The apparatus as claimed in claim 14, wherein the request for querying the interfaces of the webpage is generated through responding to by the client a trigger operation on a tool for querying interfaces and based on a webpage corresponding to the trigger operation.

16. The apparatus as claimed in claim 15, further comprising:
an interface metadata searching module, configured to search for interface metadata corresponding to the invoked interfaces based on the interface identifiers of the invoked interfaces;
an interface list item obtaining module, configured to obtain an interface list item corresponding to a display interface of the interface list; and
an interface metadata feeding module, configured to feed a buffering instruction carrying the interface metadata back to the client, so that the client buffers the interface metadata to an interface metadata buffer region corresponding to the interface list item, wherein buffer locations of the interface metadata in the interface metadata buffer region are correlated with the interface identifiers, and the interface metadata buffer region is configured to display correlated interface metadata when an interface identifier in the interface list item is triggered.

17. The apparatus as claimed in claim 16, further comprising:
an interface verifying module, configured to obtain interface verification results by verifying request results corresponding to the historical request events based on the interface metadata; and
a verification result feeding module, configured to feed a buffering instruction carrying the interface verification results of the invoked interfaces back to the client, so that the client buffers the interface verification results to a verification result buffer region.

18. The apparatus as claimed in claim 17, wherein the interface verifying module comprises:
a parameter-requirement obtaining unit, configured to obtain passing parameters with preset standards and format requirements on feedback data, in the interface metadata;
a passing parameter verifying unit, configured to obtain passing parameter verification results by verifying passing parameters corresponding to the historical request events based on the passing parameters with preset standards;
a feedback data verifying unit, configured to obtain feedback data verification results by verifying feedback data corresponding to the historical request events based on the format requirements on feedback data; and
an interface verification result obtaining unit, configured to obtain the interface verification results based on the passing parameter verification results and the feedback data verification results.

19. The apparatus as claimed in any one of claims 14 to 18, further comprising an interface searching module, and the interface searching module comprising:
a keyword extracting unit, configured to receive, from the client, a request for querying an interface, and extract a keyword carried in the request for querying the interface;
a querying unit, configured to obtain an interface query result corresponding to the keyword, wherein the interface query result comprises an interface identifier and interface metadata of an interface corresponding to the keyword; and
a query result feeding unit, configured to feed the interface query result back to the client.

20. The apparatus as claimed in any one of claims 14 to 19, further comprising an abnormal interface identifying module, and the abnormal interface identifying module comprising:
an abnormal request event obtaining unit, configured to obtain an abnormal request event that a corresponding request result carries an abnormal status code from the historical request events;
an abnormal interface identifying unit, configured to identify an abnormal interface corresponding to the abnormal request event, and determine abnormal interface data; and
an abnormal interface feeding unit, configured to feed a buffering instruction carrying the abnormal interface data back to the client, so that the client buffers the abnormal interface data to a data buffer region.

21. The apparatus as claimed in claim 20, further comprising an abnormal interface parameter verifying module, and the abnormal interface parameter verifying module comprising:
a verification rule obtaining unit, configured to receive, from the client, abnormal interface verification rules;
an abnormal interface parameter verifying unit, configured to run the abnormal interface verification rules, and obtain a parameter verification result of the abnormal interface by verifying parameters in the abnormal interface; and
a verification result feeding unit, configured to feed the parameter verification result of the abnormal interface to the client.

22. An apparatus for querying application programming interfaces of a webpage, comprising:
a query operation responding module, configured to respond to a trigger operation on a tool for querying interfaces, and generate a request for querying the interfaces of the webpage based on a webpage corresponding to the trigger operation;
a query request transmitting module, configured to transmit the request for querying the interfaces of the webpage to a server, so that the server determines a to-be-analyzed webpage corresponding to the request for querying the interfaces of the webpage, searches for historical request events of the to-be-analyzed webpage, determines interface addresses invoked when performing the historical request events, determines invoked interfaces of the to-be-analyzed webpage based on the interface addresses, generates an interface list based on interface identifiers of the invoked interfaces, and feeds the interface list back; and
an interface list displaying module, configured to receive and display the interface list fed back by the server.

23. The apparatus as claimed in claim 22, further comprising:
a first receiving unit, configured to receive, from the server, a buffering instruction carrying interface metadata after the server searches for the interface metadata based on the interface identifiers;
a first obtaining unit, configured to obtain an interface list item corresponding to a display interface of the interface list;
a first buffering unit, configured to buffer the interface metadata to an interface metadata buffer region corresponding to the interface list item; and
a first displaying unit, configured to display, interface metadata correlated with an interface identifier in the interface list, in the interface metadata buffer region, in response to a trigger operation on the interface identifier in the interface list.

24. The apparatus as claimed in claim 22, further comprising:
a second receiving unit, configured to receive, from the server, a buffering instruction carrying interface verification results of the invoked interfaces after the server obtains the interface verification results by verifying request results corresponding to the historical request events based on the interface metadata;
a second buffering unit, configured to buffer the interface verification results to a verification result buffer region corresponding to the tool for querying interfaces; and
a second displaying unit, configured to display the interface verification results in the verification result buffer region in response to a trigger operation on the tool for querying interfaces.

25. The apparatus as claimed in claim 22, further comprising:
a first generating unit, configured to generate a request for querying an interface and carrying a keyword inputted, in response to an operation for inputting the keyword on the tool for querying interfaces; and
a first receiving and displaying unit, configured to transmit the request for querying the interface to the server, and receive and display an interface query result from the server.

26. The apparatus as claimed in claim 22, further comprising:
a first transmitting unit, configured to transmit abnormal interface verification rules inputted to the server in response to an operation for inputting the abnormal interface verification rules on the tool for querying interfaces; and
a second receiving and displaying unit, configured to receive and display a parameter verification result of an abnormal interface from the server.

27. An electronic device, comprising:
a processor; and
a memory for storing instructions executable by the processor;
wherein the processor is configured to execute the instructions to perform the method as claimed in any one of claims 1 to 8 or claims 9 to 13.

28. A storage medium having stored therein instructions that, when executed by a processor of an electronic device, causes the electronic device to perform the method as claimed in any one of claims 1 to 8 or claims 9 to 13.
